# EUROPÄISCHE PATENTSCHRIFT

(11) **EP 3 374 579 B1**
(45) Veröffentlichungstag und Bekanntmachung des Hinweises auf die Patenterteilung: **11.05.2022**
(21) Anmeldenummer: 16828703.5
(22) Anmeldetag: 14.12.2016
(51) Int. Cl.: E04F 15/02

(54) **MECHANISCHE VERBINDUNG FÜR PANEELE**
MECHANICAL CONNECTION FOR PANELS
LIAISON MÉCANIQUE POUR PANNEAUX

(30) Priorität: 14.12.2015 DE 102015121761
(43) Veröffentlichungstag der Anmeldung: 19.09.2018
(73) Patentinhaber: Schulte, Guido, 59602 Rüthen (DE)
(72) Erfinder: ESCHLBECK, Franz-Josef, 83209 Prien am Chiemsee (DE); SCHULTE, Guido, 59602 Rüthen (DE)
(74) Vertreter: Griepenstroh, Jörg
(86) Internationale Anmeldenummer: PCT/DE2016/100586
(87) Internationale Veröffentlichungsnummer: WO 2017/101910

(56) Entgegenhaltungen:
- EP-A1- 2 674 546
- DE-A1-102009 041 297
- DE-A1-102012 105 793

## Beschreibung

Die Erfindung betrifft mechanische Verbindungen für Paneele, die zu einem Belag miteinander verbindbar sind.

Wand-, Decken- und Bodenbeläge, wie z. B. Fertigparkett, Echtholzböden oder Laminatfußböden, bestehen aus mehreren Reihen von in ihrer Konfiguration vorwiegend rechteckigen Paneelen. Konventionell besitzen die Paneele auf einer Längsseite und auf einer Kopfseite durchgehende Nuten und auf der jeweils gegenüberliegenden Längsseite bzw. Kopfseite durchgehende Federn, die an die Nuten formschlüssig angepasst sind. Durch die Verbindung von Nut und Feder werden die Paneele verlegt, wobei die Paneele zweier benachbarter Reihen versetzt zueinander angeordnet werden.

Es ist bekannt, an den Nuten und Federn mechanische Verriegelungsmittel auszubilden, welche bei in einem Fußbodenbelag benachbarten Paneelen miteinander in rastenden Eingriff gelangen. Hierdurch soll eine Fugenbildung bedingt durch Dehnungs- oder Schrumpfungsvorgänge vermieden werden. An die Nut und Feder der Paneele sind aneinander angepasste Verriegelungselemente in Form von Vertiefungen, Ausnehmungen oder Vorsprüngen ausgebildet, um die Paneele in der zusammengefügten Lage leimlos zu halten.

In der Regel werden die Paneele entlang ihrer Längsseiten ineinander gedreht oder geklickt und anschließend seitlich verschoben, so dass die Verriegelungsleisten an den Kopfseiten in Eingriff gelangen.

Es sind federnde Verriegelungselemente zur Vertikalverriegelung einander benachbarter Paneele bekannt, die randseitig vorstehen, beim Ablegen der Paneele hinter die Randseite zurückgedrückt werden müssen und in der Verbindungsposition wieder über die Randseite hinaus verlagert werden müssen, um die Paneel zu verbinden. Die bidirektionale Bewegung ist aufwändig.

Die Dokumente EP 2 674 546 A1 und DE 10 2009 041297 A1 offenbaren solche Verbindungen.

Der Erfindung liegt die Aufgabe zugrunde, eine mechanische Verbindung für Paneele, die insbesondere zu einem Bodenbelag miteinander verbindbar sind, aufzuzeigen, bei welcher der Verriegelungsmechanismus es nicht erforderlich macht, ein Verriegelungselement zunächst zurückzudrücken, bevor es in die Rastposition gelangt.

Diese Aufgabe ist durch eine Verbindung mit den Merkmalen des Patentanspruchs 1 gelöst.

Vorteilhafte Weiterbildungen der Erfindung sind Gegenstand der Unteransprüche.

Die mechanische Verbindung ist für Randseiten mit voneinander zu verbindenden Paneelen vorgesehen. Benachbarte erste und zweite Paneele sind durch eine im Wesentlichen senkrechte Fügebewegung in horizontaler und vertikaler Richtung verriegelbar. Horizontale Richtung bedeutet parallel zur Verlegeebene. Vertikal bedeutet senkrecht zur Verlegeebene. Es wird im Nachfolgenden und in Bezug auf Begriffe wie oben, unten, horizontal und vertikal davon ausgegangen, dass es sich bei den Paneelen um Bodenpaneele handelt, die entsprechend horizontal verlegt werden und im Wesentlichen vertikal abgelegt werden. Die Vertikalverriegelung wirkt dementsprechend in Vertikalrichtung und die Horizontalverriegelung in Horizontalrichtung.

Zur Vertikalverriegelung ist an dem zuerst zu verlegenden ersten Paneel eine Verriegelungskante ausgebildet. An dem anschließend zu verlegenden zweiten Paneel, das mit dem ersten Paneel verbunden werden soll, ist ein gegenüber beiden Paneelen verlagerbares Verriegelungselement angeordnet. Das Verriegelungselement ist durch eine Schwenkbewegung hinter bzw. von oben betrachtet unter die Verriegelungskante des ersten Paneels verlagerbar. Das Verriegelungselement besitzt hierzu einen Verriegelungsvorsprung zum Verlagern hinter/unter die Verriegelungskante. Das Verriegelungselement hat zudem einen insbesondere bogenförmigen Führungsarm, welcher an einer Führungsnut des ersten Paneels geführt ist. Der Führungsarm ist dazu ausgebildet, mit einer Dreh- oder Schwenkbewegung des Verriegelungselements teilweise aus der Führungsnut herausgezogen zu werden, indem ein aus der Führungsnut vorstehender Schenkel des Verriegelungselements beim Ablegen in einem Bereich unterhalb der Verriegelungskante mit dem ersten Paneel in Kontakt kommt.

Der Kontakt des Schenkels mit dem ersten Paneel führt dazu, dass der Schenkel dem ersten Paneel ausweichen muss und eine nach oben wirkende Kraft auf das Verriegelungselement und insbesondere den Führungsarm ausgeübt wird. Der Führungsarm und die Führungsnut sind derart ausgebildet, dass das Verriegelungselement gewissermaßen nach oben gedrückt und teilweise aus der Führungsnut herausziehbar ist. Die Bewegung nach oben, d. h. von der Unterseite der Paneele weg, ist eine geführte Bewegung. Die Bewegungsrichtung ist zumindest teilweise durch die Führungsnut und den Führungsarm vorgegeben. Die Bewegung erfolgt entlang einer Kurve oder entlang mehrerer Kurvenabschnitte, insbesondere entlang von Kreisbogenabschnitten, insbesondere auf einem Kreisbogen. Der Übergang zwischen benachbarten Kurvenabschnitten kann glatt und ohne Sprünge sein, so dass sich die Kurvenabschnitte tangential aneinander anschließen. Es sind aber auch Knickpunkte im Kurvenverlauf im Übergang von benachbarten Kurvenabschnitten denkbar. Gerade Abschnitte können sich mit Kurvenabschnitten abwechseln. Selbst eine Abfolge von kürzeren, aber geraden Abschnitten, die sich wie eine Kettenlinie aneinander anschließen ist möglich, um einen kurvenförmigen Verlauf zu schaffen.

Der sich auf dem ersten Paneel abstützende Schenkel bewirkt, dass der Führungsarm aus der Führungsnut herausgezogen und aufgrund der gegenseitigen Führung eine Dreh- oder Schwenkbewegung ausführt. Der Begriff Drehbewegung bezieht sich auf kreisbogenförmige Bewegungen. Der Begriff Schwenkbewegung bezieht sich auf nicht-kreisbogenförmigen Bewegungen. Der Bewegungsablauf kann auch kombiniert sein.

Die erfindungsgemäße mechanische Verbindung basiert auf dem Prinzip, dass das Verriegelungselement zum Verriegeln nur in eine einzige Richtung verlagert wird. Das Verriegelungselement ist in einer Ausgangsstellung innerhalb der Führungsnut gehalten und kann in die Verriegelungsstellung gedreht bzw. verschwenkt werden. Das Verschwenken erfolgt erfindungsgemäß nicht bidirektional, d. h. zunächst in die Führungsnut hinein und anschließend wieder heraus, sondern unidirektional, d. h. nur aus der Führungsnut heraus und zwar unter dem Wirkeinfluss des Schenkels, der von dem ersten Paneel nach oben gedrückt wird.

Die Paneele besitzen eine Horizontalverbindung und eine Vertikalverbindung an ihren miteinander zu verbindenden Randseiten. Die Horizontalverbindung ist dadurch herstellbar, dass das zuerst zu verlegende Paneel das anschließend zu verlegende zweite Paneel untergreift. Hierzu sind an den Paneelen nach oben bzw. nach unten offene Nuten und Vorsprünge vorgesehen, die zur Horizontalverriegelung miteinander in Eingriff bringbar sind. Die Horizontalverriegelung kann auch durch ein separates Verriegelungselement bewirkt sein, dass unterseitig der Paneele angeordnet ist, z. B. in Form einer separaten Klammer.

Die Vertikalverriegelung wird durch das besagte Verriegelungselement bewirkt, welches hinter/unter die Verriegelungskante des anderen Paneels verlagerbar ist. Das Verriegelungselement ist nur an dem zweiten Paneel angeordnet, dass zeitlich nach und örtlich seitlich neben dem ersten Paneel verlegt wird.

Der Schenkel ist vorzugsweise starr mit dem bogenförmigen Führungsarm verbunden. Die starre Verbindung ermöglicht es, die vom Schenkel ausgehenden Kräfte direkt in den Führungsarm einzuleiten, so dass der Führungsarm mit der Kraft, mit welcher das zweite Paneel abgelegt wird, aus der Führungsnut herausgezogen wird. Auf diese Weise kann über den Druck, der auf das zweite Paneel ausgeübt wird, die Verriegelung beeinflusst werden. Eine im Wesentlichen starre Verbindung reduziert auch die Anzahl der Freiheitsgrade des Verriegelungselements und verbessert die Führung zwischen Führungsnut und Führungsarm. Der Begriff "starr" ist funktional zu verstehen, wobei die Funktion des Heranziehens des Führungsarms und die Funktion des Führens des Verriegelungselements in die Verriegelungsposition gewährleistet sein muss. Die starre Verbindung bezieht sich auf die jeweiligen Werkstoffeigenschaften des Verriegelungselements im Übergangsbereich vom Führungsarm zum Schenkel. Bevorzugt ist das Verriegelungselement materialeinheitlich einstückig hergestellt, so dass nicht nur die Verbindung starr konfiguriert ist, sondern der Werkstoff als solcher zum Erfüllen der Funktion im Wesentlichen starr ist. Das Verriegelungselement besteht vorzugsweise aus Kunststoff. Bevorzugt besitzt das Verriegelungselement über seine gesamte Länge einen gleichbleibenden Querschnitt, so dass es sehr wirtschaftlich durch Strangpressen herstellbar ist.

Die Verriegelungselemente können auch durch Material abtragende Verfahren hergestellt werden, insbesondere durch spanabhebende Verfahren. Dadurch lassen sich sehr hohe Genauigkeiten erreichen, wodurch die Passgenauigkeit des Verriegelungselements verbessert werden kann und die Präzision der mechanischen Verbindung nochmals gesteigert wird. Kombinierte Herstellungsverfahren wie z. B. ein zumindest bereichsweises spanabhebendes Bearbeiten eines zuvor stranggepressten Bauteils vereinen die kostengünstige Herstellung des Strangpressens mit der Präzision der spanabhebenden Bearbeitung.

Die Verriegelungselemente können aus metallischen Werkstoffen bestehen, insbesondere aus Aluminiumlegierungen oder Eisenlegierungen, insbesondere aus Stahl. Die Verriegelungselemente können aus Holz oder Holzwerkstoffen bestehen, d. h. aus Verbundwerkstoffen. Auch andere Verbundwerkstoffe z.B. faserverstärkte Kunststoffe sind verwendbar. Vorzugsweise besteht das Verriegelungselement ausschließlich aus Kunststoff. Es ist möglich, dass die Verriegelungsfeder bereichsweise beschichtet ist bzw. Oberflächenbereiche mit voneinander abweichenden Rauigkeiten besitzt, um die Reibung in der Führungsnut zu reduzieren.

Wenn ein Paneel nicht vertikal abgelegt wird, sondern durch eine Schwenkbewegung, die auch als Abwinkeln bezeichnet wird, kann es zu einer Tordierung des Verriegelungselements kommen, weil der Schenkel nicht gleichmäßig belastet wird. Um dem entgegenzuwirken, kann ein Verriegelungselement mehrfach unterbrochen sein oder es können auch mehrere kürzere Verriegelungselemente in eine Seite eines Paneels eingesetzt sein. Die erfindungsgemäße Verbindung eignet sich daher sowohl für Paneele, die im Wesentlichen senkrecht gefügt werden als auch für Paneele, die durch Abwinkeln gefügt werden. Wenn das zweite Paneel wieder nach oben geschwenkt wird, ist die mechanische Verbindung ohne Werkzeuge wieder lösbar. Es ist auch möglich, das Verriegelungselement parallel zur Längsseite zu verlagern, d.h. aus der Führungsnut herauszudrücken, um die Paneele zu entriegeln.

Die Führung des Führungsarms wird nicht nur die vorzugsweise bogenförmige Kontur des Führungsarms bestimmt, sondern auch durch die Kontur der Führungsnut. Bevorzugt ist die Kontur der Führungsnut zumindest bereichsweise bogenförmig gekrümmt. Insbesondere sollte die untere Nutwange der Führungsnut zumindest bereichsweise gekrümmt sein, insbesondere konkav. Der Führungsarm liegt beim Herausziehen aus der bogenförmig gekrümmten Führungsnut im Bereich der Mündung der oberen Nutwange an der Führungsnut an. Das ist durch den nach oben wirkenden Druck des Schenkels bedingt. Gleichzeitig stützt sich der Führungsarm mit seiner Unterseite an der unteren Nutwange ab. Die untere Nutwange ist im Wirkeingriff mit der unteren Seite des Führungsarms bevorzugt so konfiguriert, dass nicht nur Linienberührung, sondern eine Flächenberührung erfolgt. Die untere Nutwange kann in dem Bereich, in welchem der Führungsarm in der Verriegelungsposition anliegt, an die Form des Verriegelungsarms angepasst sein. Die bogenförmige Krümmung der unteren Nutwange entspricht daher vorzugsweise der bogenförmigen Krümmung der Unterseite des Schenkels und zwar zumindest in den Bereichen, in denen die beiden Bauteile dauerhaft miteinander in Kontakt kommen. Bevorzugt ist dieser Bereich der Führungsnut und/oder der Unterseite des Führungsarms eben. Die Kontur der oberen Nutwange spielt bis auf die Gestaltung und Anordnung des Mündungsbereichs demgegenüber eine untergeordnete Rolle. Die Mündung sollte im Bereich der oberen Nutflanke gerundet sein, damit der Verriegelungskörper leicht an der Nutflanke abgleiten kann.

Die Führungsnut kann so gestaltet sein, dass sie den Führungsarm in der Ausgangsposition klemmend hält. Hierzu kann das hintere Ende der Führungsnut etwas schmaler und/oder der Führungsarm in diesem Bereich etwas dicker gestaltet sein. Die Nutbreite kann dementsprechend im mittleren Bereich etwas zunehmen. Dadurch ist der Führungsarm in der Ausgangsposition sicher gehalten. Das Verriegelungselement ist verliersicher an dem Paneel fixiert. Bei der Verlagerung des Verriegelungselements wird der Führungsarm so mit seinem hinteren Ende zunächst freigegeben und kann wegen der größeren Nutbreite bei nun deutlich verringerter Reibung in die Rastposition verlagert werden. Insbesondere kann die obere Nutflanke der Führungsnut im Wesentlichen gerade verlaufen, während die untere Nutflanke der Führungsnut konkav gekrümmt ist. Bevorzugt mündet die untere Nutflanke horizontal und steigt zum Tiefsten der Nut kontinuierlich zur Oberseite hin gerichtet an. Das Nuttiefste liegt bevorzugt näher an der Oberseite des Paneels als die Mündung der oberen Nutflanke. Dadurch kann ein Verriegelungselement, das einen Führungsarm hat, der fast oder vollständig bis zu Nutgrund reicht, nicht horizontal aus der Führungsnut herausgezogen werden.

In einer vorteilhaften Weiterbildung der Erfindung ist vorgesehen, dass der Schenkel in formschlüssigen Eingriff mit dem ersten Paneel gelangt, um ein ungehindertes Zurückgleiten des Schenkels in die Ausgangsposition und damit ein Endriegeln der mechanischen Verbindung zu verhindern. Hierzu kann der Schenkel in der Verriegelungsposition in eine Rastvertiefung an dem ersten Paneel greifen. Die Rastvertiefung ist vorzugsweise eine Nut oder Rille, in die der Schenkel schnappt. An dem freien Ende des Schenkels kann ein passender Vorsprung für den Eingriff in die Rastvertiefung ausgebildet sein.

In einer weiteren bevorzugten Ausgestaltung der Erfindung ist an dem ersten Paneel benachbart der Verriegelungskante eine zur Verlegeebene geneigte Rastfläche für den Eingriff mit dem Verriegelungsvorsprung angeordnet. Diese Rastfläche dient dazu, Kräfte, die senkrecht auf das erste Paneel wirken, über das Verriegelungselement in das zweite Paneel zu übertragen. Vorzugsweise liegt das Verriegelungselement flächig an dieser Rastfläche an. Die von dem ersten Paneel bzw. der Rastfläche ausgehenden Kräfte werden über den Führungsarm in das zweite Paneel übertragen. Diese Vertikalverriegelung verhindert einen Höhenversatz zwischen den Paneelen bei einseitiger Belastung. Das Verriegelungselement baut am zweiten Paneel einen Druck in der Führungsnut auf, der das zweite Paneel nach unten gegen das erste Paneel drückt. Die Paneele werden vertikal zueinander ausgerichtet, d. h. senkrecht zur Verlegeebene, so dass kein Höhenversatz zwischen den Paneelen entsteht. Die Passung ist gesichert. Ein freies Ende des Führungsarms ist also dazu ausgebildet, in der Verriegelungsposition mit seiner Unterseite entfernt von einer Nutmündung der Führungsnut gegen die untere Nutflanke der Führungsnut gedrückt zu werden, um die Paneele vertikal gegeneinander zu verriegeln. Durch den Abstand des unterseitigen Kontaktbereichs des Führungsarms von der Nutmündung können höhere Kräfte auf die untere Nutwandung ausgeübt werden als bei einer Linienberührung im Bereich der Mündung.

Die erfindungsgemäßen Verriegelungselemente können auch dadurch in der Führungsnut gesichert werden, indem ein bestimmter Bereich der Verriegelungselemente einen von den übrigen Bereichen abweichenden Querschnitt besitzt. Beispielsweise können die Verriegelungselemente an einem und vorzugsweise an beiden Enden einen zur oberen und/oder zur unteren Nutwange der Führungsnut weisenden Vorsprung aufweisen, so dass der Führungsarm über seine gesamte Länge oder auch nur abschnittsweise eine etwas größere Breite besitzt und dadurch in diesem Bereich eine größere Reibung mit der Führungsnut entsteht, als in anderen Bereichen. Dadurch kann das Verriegelungselement gegen Verlieren innerhalb der Führungsnut gesichert werden, ohne jedoch gleichzeitig die Reibung des Führungsarms innerhalb der Führungsnut über seine gesamte Länge zu erhöhen. Ein solcher Vorsprung kann bereits durch das Ablängen eines Verriegelungselements geschaffen werden. Beispielsweise kann beim Ablängen eines Kunststoffs eine in Schneidrichtung weisende Fahne, die durch Mitnahme des Materials entlang eines Schneidwerkzeugs entsteht, ausreichend sein, um das Verriegelungselement in der Führungsnut zu sichern. Derartige Vorsprünge können bei entsprechenden Schneidmitteln an beiden Enden ausgebildet sein, so dass beide Enden eines solchen Führungselementes gegen Herausfallen gesichert sind. Der Vorteil bei derartigen Vorsprüngen ist, dass sie ohne separaten Bearbeitungsschritt zeitgleich mit dem Ablängen hergestellt werden können.

Alternativ ist es möglich, einen Längenabschnitt des Verriegelungselements gezielt quer zur Längserstreckung des Verriegelungselements zu verformen, z. B. durch eine Wellung. Dadurch sitzt der Führungsarm im verformten Bereich etwas fester in der Führungsnut als in anderen Bereichen. Die Verformung ist ausreichend, wenn das Verriegelungselement verliersicher gehalten ist. Derartig verformte Bereiche befinden sich vorzugsweise an den Enden eines jeden Verriegelungselementes. Derartige Verformungen am Verriegelungselement können auch durch endseitiges Stauchen der Verriegelungselemente geschaffen werden, wodurch im Bereich der Enden Verdickungen entstehen, die zu einem festeren Sitz der Endabschnitte des Verriegelungselements in einer Führungsnut führen können.

Weil durch Prägen oder Stauchen der Endabschnitte auch der Schenkel verformt werden könnte, ist es zur Sicherstellung einer exakten Verriegelung möglich, den Schenkel im Bereich der verformten und zur Lageorientierung des Verriegelungselements vorgesehenen Enden zu entfernen. Die verformten Enden, die ohne Schenkel ausgebildet sind, können sehr kurz sein und sich auf wenige Millimeter beschränken, insbesondere auf weniger als 10 mm. Dadurch wird nur ein Bruchteil der Länge des Verriegelungselements zur Lageorientierung des Verriegelungselements in der Führungsnut verwendet, während der ganz überwiegende Teil an der Vertikalverriegelung teilnimmt.

Eine andere Weiterbildung der Erfindung sieht ferner vor, dass die nicht mit dem besagten Verriegelungselement versehene Randseiten des Paneels mit einer Profilierung zur Vertikalverriegelung versehen sind, die eine feststehende Federzunge umfasst, die mit einer Nut unterhalb der Verriegelungskante in Eingriff bringbar ist. Diese Ausgestaltung berücksichtigt den Fall, dass ein Paneel um 90° oder 180° gedreht wird. Auch in diesem Fall soll eine mechanische Verbindung in Vertikalrichtung realisierbar sein. Zu diesem Zweck ist eine Nut unterhalb der Verriegelungskante in Anpassung an feststehende Federzungen der anderen Randseiten ausgebildet.

Eine weitere Ausgestaltung der Erfindung sieht vor, dass das zweite Paneel in der Verriegelungsposition auf einer Auflagerleiste zwischen der Oberseite des ersten Paneels und der Verriegelungsleiste aufliegt, wobei das zweite Paneel entweder durch den Druck des Verriegelungselements von unten gegen das erste Paneel oder bei einer feststehenden Feder von der Federzunge an dem ersten Paneel zur Vertikalverriegelung gehalten ist. Die Auflagerleiste ist damit Teil der Vertikalverriegelung, wobei dieser Teil der Vertikalverriegelung ein zu weites Absenken des zweiten Paneels gegenüber dem ersten Paneel verhindert. Die Auflagerleiste verläuft bevorzugt parallel zur Oberseite der Paneele. Abweichende Orientierungen sind möglich, solange für das zweite Paneel ein Auflager an dem ersten Paneel zur Verfügung steht.

Die Paneele können rechteckig oder quadratisch ausgebildet sein. Typischerweise ist eine Seite mit einem Verriegelungselement ausgebildet und die gegenüberliegende Seite mit einer dazu passenden Verriegelungskante. Es ist möglich, bei derartigen Paneelen über Eck benachbarte Seiten mit den besagten Verriegelungselementen auszustatten. In diesem Fall sind die zwei anderen Seiten mit den dazu passenden Verriegelungskanten versehen. Dies soll möglichst bei quadratischen Paneelen eine größere Freiheit beim Verlegen.

Der Erfindungsgedanke ist für alle Boden-, Wand- und Deckensysteme anwendbar. Neben Werkstoffplatten ohne Beschichtungen können insbesondere Oberbeläge auf einem Träger mit der mechanischen Verbindung versehen sein. Der Träger kann insbesondere eine Holzwerkstoffplatte, wie zum Beispiel eine MDF-, HDF- oder Spanplatte sein. Die mechanische Verbindung eignet sich für Echtholzbeläge, Laminat, Träger mit lackierten Oberflächen als Oberbelag, Linoleum, Kork auf Trägerplatten etc. Die Deckschicht kann insbesondere aus einem Dekorpapier mit Overlay bestehen, welches die Optik der Elemente bestimmt.

Bei einem Fußbodenbelag kann es sich somit um einen Fertigparkettboden, einen Echtholzboden oder um einen Laminatfußboden handeln. Ebenso eignen sich Elemente aus massivem Material, wie z. B. Holzdielen, Holzelemente, gegossene oder gespritzte Formplatten aus Kunststoff, insbesondere PVC, Vinyl oder aus Formteilen oder Gipsplatten. Die Verriegelungselemente können auch bei Paneelen mit geringerer Dicke von 4 bis 8 mm verwendet werden. Die Paneele können unter anderem Paneele für PVC-Böden sein, z. B. Trägerplatten mit oberseitigen Belägen auf PVC-Basis. Die Paneele können auch Kunststoffplatten oder Platten auf Zementbasis sein. Die einzelnen Paneele können durch Fasern verstärkt sein. WPC/BPC (Wood-Plastic-Compound/Bamboo-Plastic-Compound)-Werkstoffe sind ebenso geeignet, wie Paneele mit Wood-Powder-Anteilen (Gemisch aus Holzfasern, Pigmenten und Bindemitteln).

Der erfindungsgemäße Belag ermöglicht bei entsprechenden Verriegelungsnuten Klickverbindungen, die sowohl durch Einschwenken (fold down) als auch durch ein senkrechtes Ablegen von oben hergestellt werden können. Der erfindungsgemäße Belag eignet sich für rechteckige und quadratische Paneele sowie für Designverlegungen, bei denen Kreuzfugen ausgebildet werden. Es ergibt sich eine wesentlich größere gestalterische Vielfalt für diese Art der sogenannten Klick-Paneele. Die Erfindung ist nicht darauf beschränkt, dass die Paneele rechteckig sind und insbesondere nicht darauf, dass die Paneele zweier benachbarter Reihen versetzt zueinander angeordnet sind.

Ein Vorteil des erfindungsgemäßen Verriegelungselementes ist es, dass es im entriegelten Zustand nicht über die Randseite des Paneels vorsteht und daher nicht oberhalb der zu hintergreifenden Verriegelungskante mit dem zuerst verlegten Paneel in Kontakt kommt. Die Feder ist geschützt angeordnet, kann in der Ausgangsposition klemmend und/oder durch adhäsive Stoffe gehalten sein, wobei die Adhäsionswirkung beim Verriegeln aufgehoben wird. Die Verriegelungselemente können für Paneele mit Dicken über 4 mm und insbesondere für Quadrate eingesetzt werden.

Die Erfindung wird nachfolgend anhand von in den Zeichnungen schematisch dargestellten Ausführungsbeispielen näher erläutert. Es zeigt:
- Figur 1: einen Vertikalschnitt durch den Randbereich zweier miteinander in Eingriff stehender Paneele gemäß einer ersten Ausführung;
- Figur 2: einen Vertikalschnitt gemäß Figur 1 während des Verbindens;
- Figur 3a bis g: einen Vertikalschnitt durch den Randbereich zweier miteinander zu verbindender Paneele gemäß einer weiteren Ausführungsform während des Verbindens;
- Figur 4a bis g: einen Vertikalschnitt durch den Randbereich zweier miteinander zu verbindender Paneele gemäß der ersten Ausführungsform;
- Figur 5a: einen Vertikalschnitt durch den Randbereich zweier miteinander zu verbindender Paneele gemäß einer dritten Ausführungsform;
- Figur 5b: einen Vertikalschnitt durch den Randbereich des zweiten Paneels gemäß der Figuren 1 bis 4;
- Figur 6a: einen Vertikalschnitt durch den Randbereich zweier miteinander in Eingriff stehender Paneele gemäß Figur 5a);
- Figur 6b: in vergrößerter Darstellung Fig. 4 g);
- Figur 7a: einen Vertikalschnitt durch den Randbereich zweier miteinander in Eingriff stehender Paneele gemäß einer vierten Ausführungsform;
- Figur 7b: in vergrößerter Darstellung Fig. 3 g);
- Figur 8: Vertikalschnitt durch den Randbereich zweier miteinander in Eingriff stehender Paneele in zwei unterschiedlichen Positionen des Verriegelungselements (Winkel W1);
- Figur 9: einen Vertikalschnitt durch den Randbereich zweier miteinander in Eingriff stehender Paneele gemäß einer fünften Ausführungsform;
- Figur 10: den Randbereich gemäß Figur 8 mit eingezeichneten Kraftvektoren;
- Figur 11: Enden von Verriegelungselementen in einer Perspektive mit Blickrichtung auf den Führungsarm;
- Figur 12: Die Verriegelungselemente der Figur 10 in einer Perspektive mit Blickrichtung auf den Schenkel und
- Figur 13: Querschnitt des Verriegelungselements der Figuren 10 und 11 vor und nach dem Prägen.

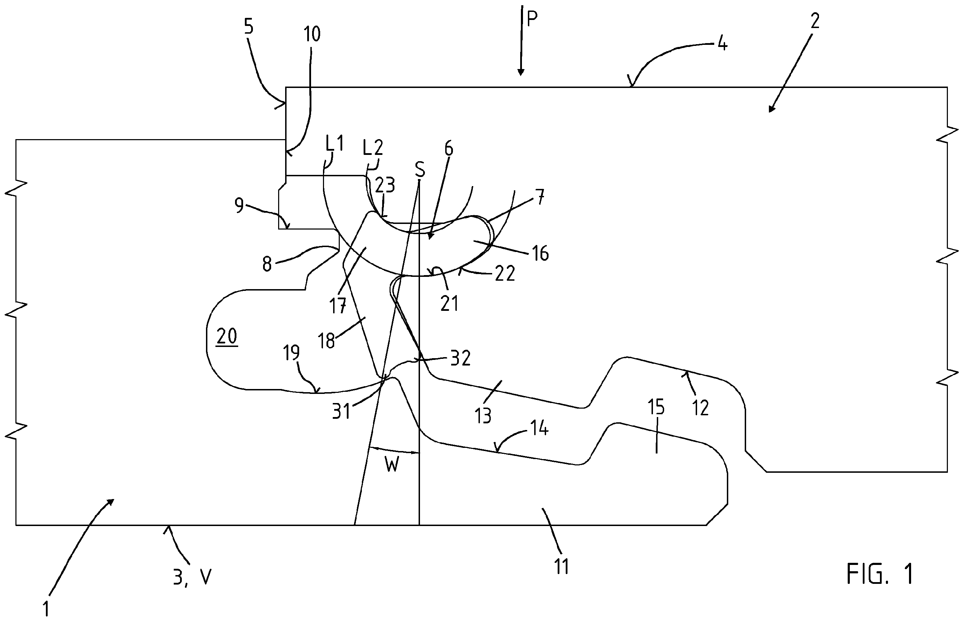

Figur 1 zeigt den Querschnitt durch den Verbindungsbereich zweier Paneele 1, 2. Die Paneele 1, 2 sind so konfiguriert, dass sie zu einem Belag, insbesondere einem Fußbodenbelag, zusammengesetzt werden können. Die Paneele 1, 2 besitzen eine dem Untergrund zugewandte Unterseite 3 sowie eine Oberseite 4, die der Sichtseite entspricht. Die Unterseite 3 und die Oberseite 4 verlaufen parallel zu einer Verlegeebene V.

Das zweite Paneel 2 weist an der zum ersten Paneel 1 weisenden Seite 5 ein Verriegelungselement 6 in einer Führungsnut 7 auf. Das Verriegelungselement 6 ist dafür vorgesehen, hinter eine Verriegelungskante 8 an dem ersten Paneel 1 zu fassen bzw. von oben betrachtet unter die Verriegelungskante 8 zu fassen. Die Verriegelungskante 8 befindet sich unterhalb einer Auflagerleiste 9, die als Vorsprung an der Seite 10 des ersten Paneels 1 ausgebildet ist. Die Auflagerleiste 9 verläuft bei diesem Ausführungsbeispiel oberseitig parallel zur Verlegeebene V. Andere Orientierungen der Oberseite der Auflagerleiste 9 sind möglich. Die Oberseite kann z. B. im spitzen Winkel zur Verlegeebene V verlaufen. An der Randseite 5 des zweiten Paneels 2 ist ein entsprechender Rücksprung ausgebildet, so dass das zweite Paneel 2 nahe seiner Oberseite 4 senkrecht zur Verlegeebene V an dem ersten Paneel 1 abgestützt ist.

Das erste Paneel 1 weist eine Verriegelungsleiste 11 auf. Die Verriegelungsleiste 11 des ersten Paneels 1 steht gegenüber der Seite 10 des ersten Paneels 1 am weitesten vor. Das zweite Paneel 2 besitzt einen nach unten offenen Kuppelkanal 12 und einen sich hieran anschließenden, nach unten gerichteten Kuppelwulst 13. Das zweite Paneel 2 wird so gegenüber dem ersten Paneel 1 angeordnet, dass beim Absenken in Richtung des Pfeils P der Kuppelwulst 13 des zweiten Paneels 2 mit einem nach oben offenen Kuppelkanal 14 der Verriegelungsleiste 11 und der Kuppelkanal 12 des zweiten Paneels 2 mit einem Kuppelwulst 15 der Verriegelungsleiste 11 in Eingriff gelangt. Dieser Bereich der Paneele 1, 2 dient zur horizontalen Verbindung der Paneele 1, 2.

Das Ablegen in Richtung des Pfeils P kann dadurch erfolgen, dass die Oberseite 4 des zweiten Paneels 2 parallel zur Verlegeebene V verlagert wird. Das zweite Paneel 2 kann alternativ durch Verschwenken (fold down) um eine andere Randseite gegenüber dem ersten Paneel 1 abgewinkelt werden.

Der Kuppelwulst 15 an der Verriegelungsleiste 11 des ersten Paneels 1 sowie der nach unten vorstehende Kuppelwulst 13 an dem zweiten Paneel 2 besitzen jeweils eine schräg gestellte Oberseite bzw. Unterseite, so dass auch beim Zusammenschieben der Paneele 1, 2 in Richtung der Verlegeebene V, das heißt beim horizontalen Zusammenschieben, der Kuppelwulst 13 des zweiten Paneels 2 auf dem Kuppelwulst 15 des zuerst verlegten ersten Paneels 1 abgleitet. Dabei wird das zweite Paneel 2 angehoben, bis die beiden Paneele 1, 2 über den höchsten Punkt des Kuppelwulstes 15 der Verriegelungsleiste 11 geführt sind. Dann rutscht das zweite Paneel 2 selbsttätig in den nach oben offenen Kuppelkanal 14 an der Verriegelungsleiste 11. Die Paneele 1, 2 können daher nicht nur durch senkrechtes Ablegen oder Einwinkeln miteinander verbunden werden, sondern auch durch horizontales Ineinanderschieben in Richtung der Verlegeebene V.

Wesentlicher Bestandteil der Verbindung zwischen den beiden Paneelen 1, 2 ist das Verriegelungselement 6 sowie das Zusammenspiel der Profilierungen im Bereich der Randseiten 5, 10 der Paneele 1, 2. Das Verriegelungselement 6 besitzt einen Führungsarm 16. Der Führungsarm 16 ist derjenige Teil, der in Führungsnut 7 angeordnet ist und das Verriegelungselement 6 an dem zweiten Paneel 2 hält. Das Verriegelungselement 6 besitzt einen Verriegelungsvorsprung 17, der aus der Führungsnut 7 herausragt. Der Verriegelungsvorsprung 17 ist derjenige Bereich vor dem Führungsarm 16, der sich außerhalb der Führungsnut 7 befindet.

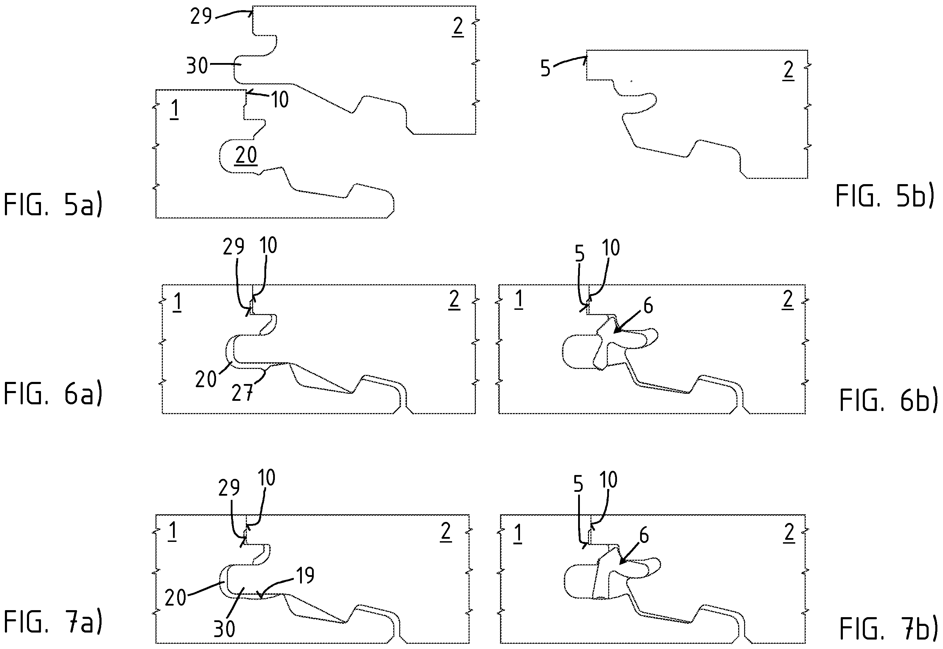

In der Schnittdarstellung hat das Verriegelungselement 6 einen im Wesentlichen L- oder Y-förmigen Querschnitt, da sich an den Verriegelungsvorsprung 17 in der Bildebene nach unten ein Schenkel 18 anschließt. Der Schenkel 18 steht daher nicht über die Randseite 5 des zweiten Paneels 2 vor. Er erstreckt sich in der Ausgangsposition in Richtung des Kuppelwulstes 13 und liegt an dem zweiten Paneel 2 an. Der Schenkel 18 ist dafür vorgesehen, das Verriegelungselement 6 zu verschwenken und stößt beim Absenken des zweiten Paneels 2 in Richtung des Pfeils P auf eine Führungsfläche 19, die sich unterhalb der Verriegelungskante 8 am ersten Paneel 1 befindet. Die Führungsfläche 19 ist bei diesem Ausführungsbeispiel konkav gekrümmt. An die Führungsfläche 19 schließt sich eine Nut 20 an, die zur Randseite 10 hin offen ist und zur Aufnahme einer feststehenden Federzunge dient, wie es in Figur 5a gezeigt ist. Der Führungsarm 16 ist biegesteif, d. h. im Wesentlichen starr mit einem Schenkel 18 verbunden.

Am freien Ende des Schenkels 18 sind zwei Stützleisten 31, 32 angeordnet, die dafür vorgesehen sind, mit der Führungsfläche 19 in Kontakt zu kommen. Sie gelangen beim Wirkeingriff mit der Führungsfläche 19 in Linienberührung mit der Führungsfläche 19, so dass die Reibung gegenüber einer flächigen Berührung reduziert ist.

Das Verriegelungselement 16 ist in der Führungsnut 7 geführt. Dazu ist die untere Nutwange 21 der Führungsnut 7 konkav gekrümmt. In diesem konkreten Ausführungsbeispiel ist die Führungsnut 7 in ihrem sogar kreisbogenförmig, wie anhand der Linie L1 ergibt. Die Linie L1 beschreibt einen Kreis um einen Drehpunkt S, der sich oberhalb der Führungsnut 7 befindet. Eine Linie L2 beschreibt einen kleineren Radius, ebenfalls um den Drehpunkt S. Es ist zu erkennen, dass der Führungsarm eine konvex gekrümmte Unterseite 22 besitzt, wobei die Krümmung entsprechend der Linie L1 der konkaven Krümmung der unteren Nutwange 21 der Führungsnut 7 entspricht.

Andererseits liegt der Führungsarm 16 im Bereich der Mündung der Führungsnut 7 oberseitig an der oberen Nutwange 23 an, wobei der Mündungsbereich auf der Linie L2 liegt. Dementsprechend wird das Verriegelungselement 6 entlang der beiden Kreisbögen (Linien L1 und L2) verlagert. Der Winkel W1 zeigt an, wie weit das Verriegelungselement mindestens zu verschwenken ist, bis beide Stützleisten 31, 32 mit der Führungsfläche 19 in Kontakt kommen.

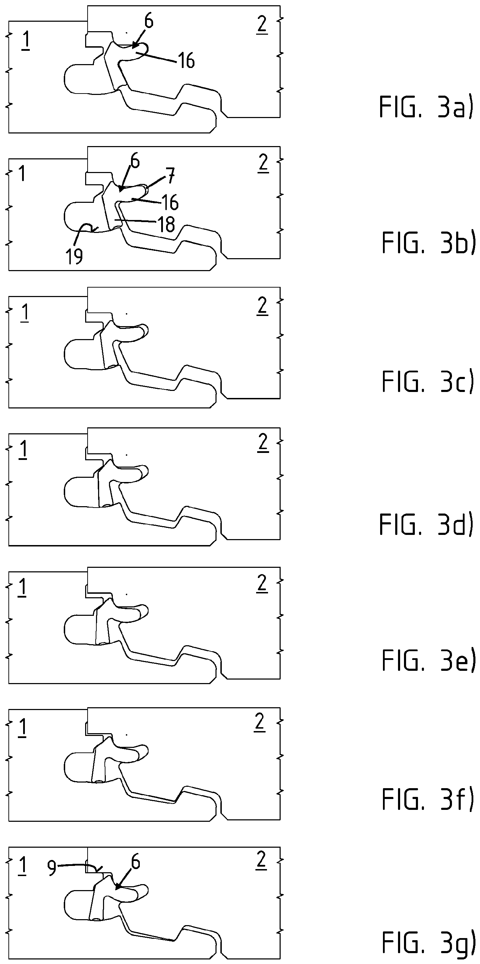

Die Figuren 3a bis g zeigen die vorgesehene Bewegungsabfolge. In Figur 3a sind die beiden Paneele 1, 2 gezeigt kurz bevor das Verriegelungselement 6 mit dem ersten Paneel 1 in Kontakt kommt. Beim Kontakt mit der Führungsfläche 19 drückt der Schenkel 18 des Verriegelungselements 6 dieses nach oben, so dass der Führungsarm 16 aus der Führungsnut 7 herausgezogen wird. Die Figuren 3c bis 3f zeigen den weiteren Ablauf dieser Verschwenkbewegung, bis schließlich die Verriegelungsposition in Figur 3g erreicht ist. Die beiden Paneele 1, 2 befinden sich auf einer Höhe, denn das zweite Paneel 2 liegt auf der Auflagerleiste 9 des ersten Paneels 1 auf. Dadurch ist die Auflagerleiste 9 zwischen dem Verriegelungselement 6 und dem oberseitig aufliegendem zweiten Paneel 2 klemmgehaltert. Gleichzeitig verhindert das Verriegelungselement 6, dass das zweite Paneel 2 vertikal von dem ersten Paneel 1 abgehoben wird.

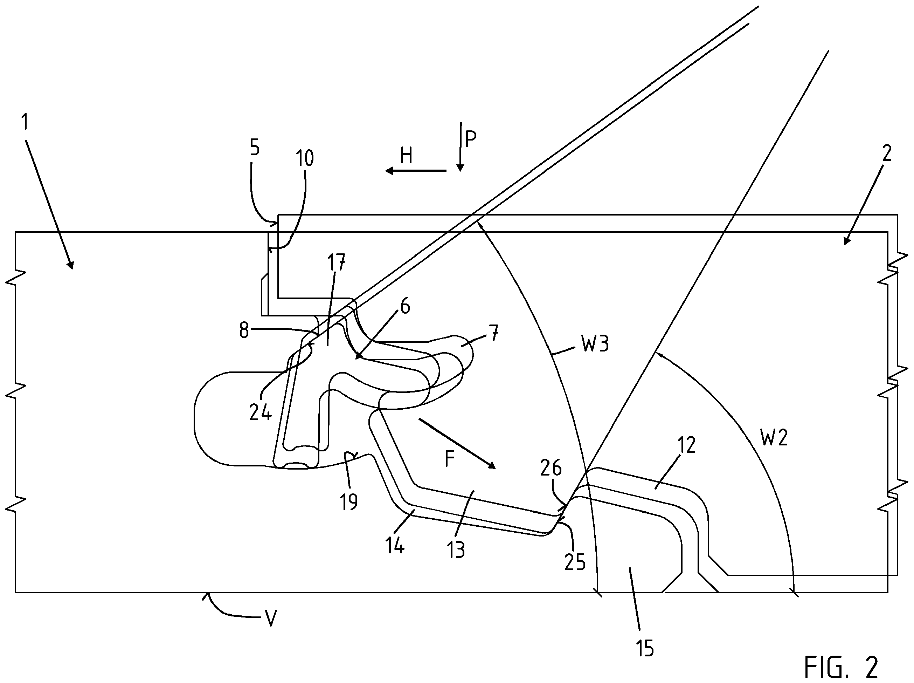

Eine etwas andere Möglichkeit der Fügebewegung zeigt die Darstellung der Figur 2. Es handelt sich um baugleiche Bauteile, wie in den Figuren 1 und 3, allerdings werden bei diesem Ausführungsbeispiel horizontale und vertikale Bewegungen überlagert. Das zweite Paneel 2 wird einerseits in Richtung des Pfeils P, das heißt vertikal abgesenkt. Andererseits wird das zweite Paneel 2 auch horizontal in Richtung des Pfeils H, das heißt in Richtung des ersten Paneels 1 verlagert, so dass die Randseiten 5, 10 der Paneele 1, 2 aneinanderstoßen. Das Paneel 2 ist in zwei unterschiedlichen Positionen dargestellt. Die exakte Fügbewegung ergibt sich aus dem Kontakt zwischen dem Kuppelwulsten 15 und 13 im Übergangsbereich zu ihren jeweiligen Kupplungsnuten 12, 14. Der Winkel W2 gegenüber der Verlegeebene V beträgt vorzugsweise 55 bis 65°, insbesondere 60°. Es ist der Flankenwinkel im Übergang zwischen dem Kuppelwulst 13, 15 und Kuppelkanal 12, 14 des ersten bzw. zweiten Paneels 1, 2. Der zweite eingezeichnete Winkel W2 bezeichnet den Winkel gegenüber der Verlegeebene V, den eine Rastfläche 24 hat, die sich an die Verriegelungskante 8 anschließt. Der Verriegelungsvorsprung 17 liegt flächig an der Rastfläche 24 an. Dadurch können Kräfte, die von oben auf das erste Paneel 1 wirken, über die Rastfläche 24 flächig in das Verriegelungselement 6 eingeleitet werden. Das Verriegelungselement 6 überträgt diese Kräfte wiederum über den Führungsarm 7 auf das zweite Paneel. Der Führungsarm 7 weist hierbei im Wesentlichen zum Kuppelwulst 15 des ersten Paneels 1 und drückt daher den Kuppelwulst 13 im Bereich der Stützflanke 25 auf die zugehörige Stützflanke 26 des anderen Paneels. Der Pfeil F in Figur 7 zeigt die Wirkrichtung dieser Kraft.

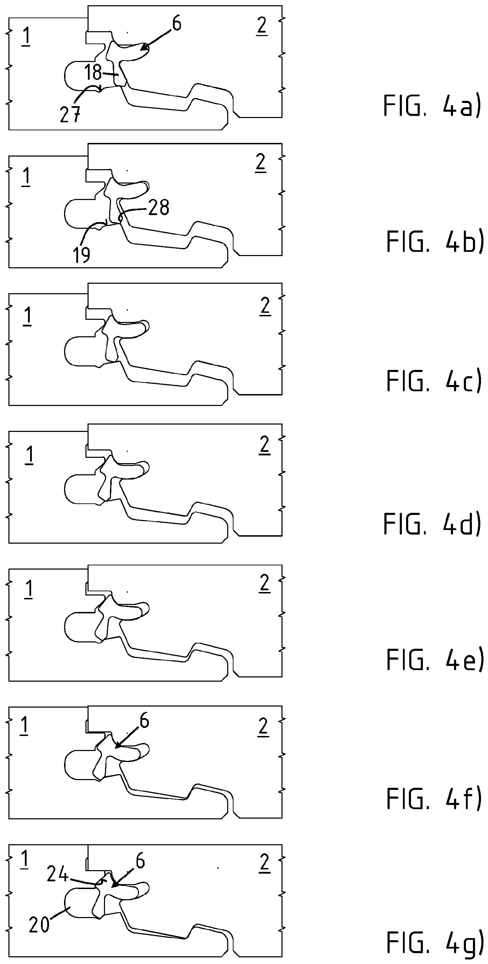

Während bei dem Ausführungsbeispiel der Figuren 1 bis 3 die Führungsfläche 19 leicht konkav gekrümmt ist aber im Übrigen ohne Vorsprünge oder Vertiefungen ausgebildet ist, sieht das Ausführungsbeispiel der Figuren 4a bis 4g ein Verriegelungselement 6 vor, das dafür vorgesehen ist, in eine Rastvertiefung 27 an dem ersten Paneel 1 zu fassen. Die Figuren 4a bis g zeigen den Bewegungsablauf analog zu den Figuren 3a bis g bei dem zuerst genannten Ausführungsbeispiel. Es ist zu erkennen, dass an dem Schenkel 18 unterseitig ein Vorsprung 28 ausgebildet ist, der anfangs über die Führungsfläche 19 gleitet. Die Führungsfläche 19 ist in diesem Ausführungsbeispiel nicht konkav ausgebildet, sondern gerade aber dennoch zur Richtungsvorgabe leicht gegenüber der Verlegeebene V geneigt. Wenn das Verriegelungselement 6 weit genug ausgeschwenkt ist, greift der Vorsprung 28 in die Rastvertiefung 27 im Bereich der unteren Nutflanke der Nut 20. Dadurch wird das die mechanische Verbindung vertikal verriegelt. Im Ergebnis soll das Verriegelungselement 6 auch nach dem Einschnappen des Vorsprungs 28 in die Rastvertiefung 27 fest an dem ersten Paneel 1 im Bereich der Rastfläche 24 anliegen, damit die Paneele 1, 2 sicher miteinander verbunden sind.

Beide Ausführungsformen gemäß Figur 3 und Figur 4 bewirken ein Herausziehen des Führungsarms 16 aus der Führungsnut 7. Die Bewegung ist in jedem Fall unidirektional, d. h. nur von dem zweiten Paneel 2 weg, hin zum ersten Paneel 1 gerichtet. Es handelt sich bei diesen beiden Ausführungsbeispielen um eine reine Drehbewegung um einen fixen Drehpunkt S, der sich räumlich innerhalb des zweiten Paneels 2 befindet.

Die Figuren 5a und 5b zeigen in der Gegenüberstellung einmal die Längsseite des Paneels 2 (Figur 5a) und die vorstehend beschriebene Kopfseite 5 des Paneels 2.

Figur 6a zeigt die längsseitige Randseite 29 des Paneels 2, wobei an dieser Randseite 29 eine feststehende Federzunge 30 angeordnet ist. Die Federzunge 30 ist passend zur Nut 21 an dem ersten Paneel 1 konfiguriert. Die Figuren 6a und 6b zeigen die Zusammenbauposition. Figur 6b entspricht der Darstellung der Figur 4g. Sie zeigt die mechanische Verbindung zwischen den Paneelen 1, 2, vorzugsweise im Bereich ihrer kopfseitigen Randseiten. Die Figur 6a zeigt bei ein- und demselben ersten Paneel 1 die Verbindung einer längsseitigen Randseite 29 mit einer Kopfseite 10 des ersten Paneels 1.

Die gleiche Situation ergibt sich auch dann, wenn benachbart der Nut 20 unterhalb der Verriegelungskante 8 keine Rastvertiefung 27 angeordnet ist, wie bei dem Ausführungsbeispiel der Figur 6a und 6b. Die Figuren 7a und 7b zeigen diese Situation, wobei der Unterschied darin besteht, dass die Führungsfläche 19 im ersten Paneel 1 lediglich konkav gekrümmt ist, was keinen Einfluss auf den Eingriff der feststehende Federzunge 30 in die Nut 20 hat. Figur 7b entspricht der Darstellung der Figur 3g und zeigt lediglich die Verbindung der Randseiten der Seiten 5, 10 der Paneele 1, 2 im Unterschied zur Verbindung der Randseiten 10, 29 in Figur 5a.

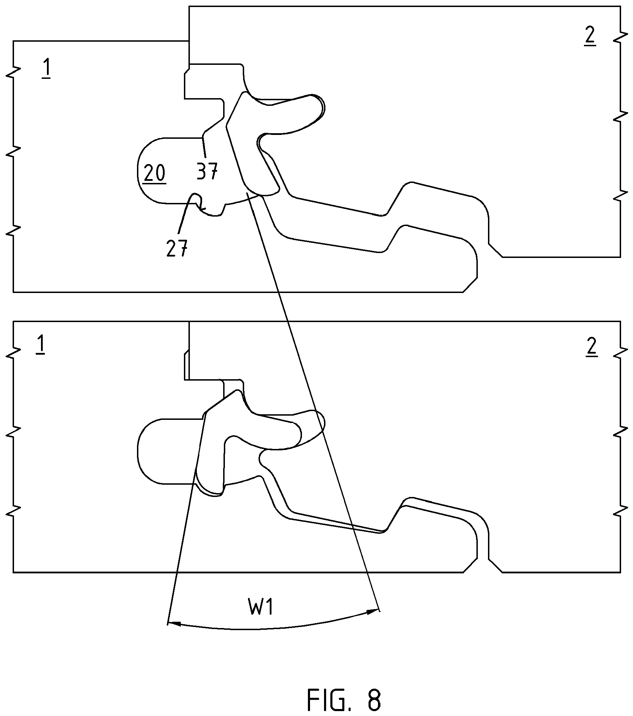

Figur 8 zeigt eine Vertikalschnitt durch den Randbereich zweier miteinander in Eingriff stehender Paneele 1, 2 in zwei unterschiedlichen Positionen des Verriegelungselements 6, um zu verdeutlichen um welchen Winkel W1 das Verriegelungselement 6 zur Verriegelung zu verschwenken ist. Der Winkel W1 wird an einer dem Führungsarm 16 abgewandten Seite und der Nut 20 zugewandten Seite gemessen und beträgt 20 bis 35°. Bei diesem Beispiel zwischen 25 und 30°. Die Ausgestaltung der Rastvertiefung 27 und ein Vorsprung 37 im Übergang von der Nut 20 zur Rastfläche 24 verhindern, dass der Schenkel 18 weiter als in der Figur 8 unten dargestellt in Richtung zur Nut 21 verlagerbar ist.

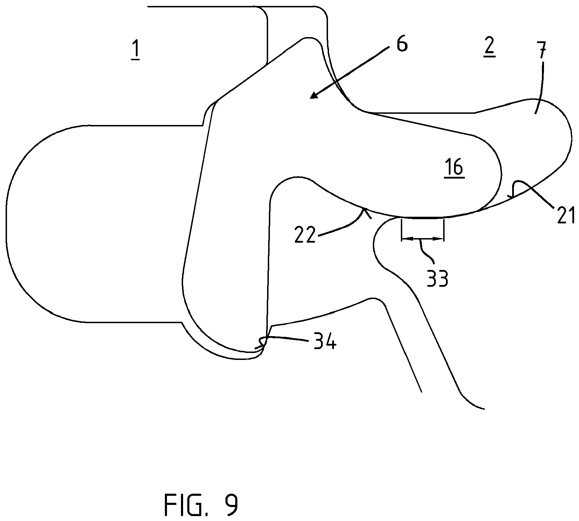

Die Figur 9 zeigt, dass die untere Nutwange 21 einen ebenen Bereich 33 hat. Dieser ebene Bereich 33 befindet sich dort, wo der Führungsarm in der Verriegelungsstellung anliegt. Der ebene Bereich 33 verläuft in diesem Ausführungsbeispiel parallel zur Verlegeebene V. Dadurch wirkt eine Kraft, die von dem Führungsarm 16 ausgeht, ausschließlich senkrecht zur Verlegeebene V und drückt das zweite Paneel 2 nach unten gegen das erste Paneel 1.

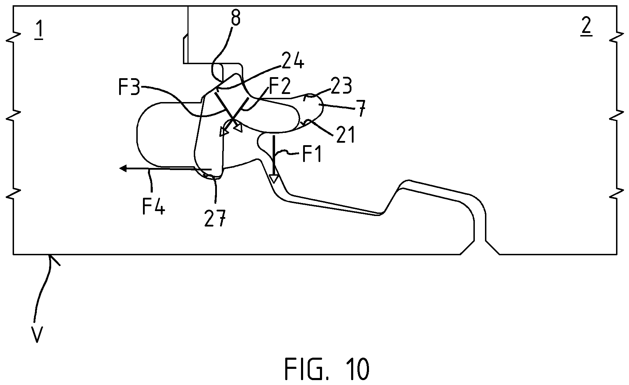

Figur 10 zeigt die entsprechenden Kraftvektoren. Der Pfeil F1 zeigt die Richtung der Kraft, die von dem Führungsarm 16 ausgeht und auf die untere Nutwange 21 der Führungsnut 7 drückt. Der Pfeil F2 zeigt die Richtung der Kraft, die von dem zweiten Paneel 2 auf das Verriegelungselement 6 wirkt und zwar im Bereich der Nutmündung der oberen Nutwange 23. Der Kraft ist in Richtung des Schenkels 18 gerichtet. Der Pfeil F3 zeigt die Richtung der Kraft, die vom ersten Paneel 1 auf das Verriegelungselement 6 ausgeübt wird, und zwar senkrecht zur Rastfläche 24 unterhalb der Verriegelungskante 8. Diese Kraft drückt den Führungsarm 16 gegen die untere Nutwange 21 der Führungsnut. Der Pfeil F4 zeigt an, dass eine im Wesentlichen parallel zur Verlegeebene V wirkende Kraft oder Kraftkomponente im Bereich der Rastvertiefung 27 auf den Schenkel 18 wirkt. Dadurch wird ein Drehmoment auf den Führungsarm 16 ausgeübt, der das zweite Paneel 2 wiederum nach unten gegen das erste Paneel 1 drückt (Pfeil F1). Die Rastvertiefung 27 besitzt hierzu auf ihrer der Verriegelungsleiste 11 gelegenen Seite eine Stützwand 34 (Figur 8), die mit der Verlegeebene V einen Winkel zwischen 45° und 90° einschließt, d.h. relativ steil ist und daher ein sicheres Einrasten des Verriegelungselements 6 ermöglicht.

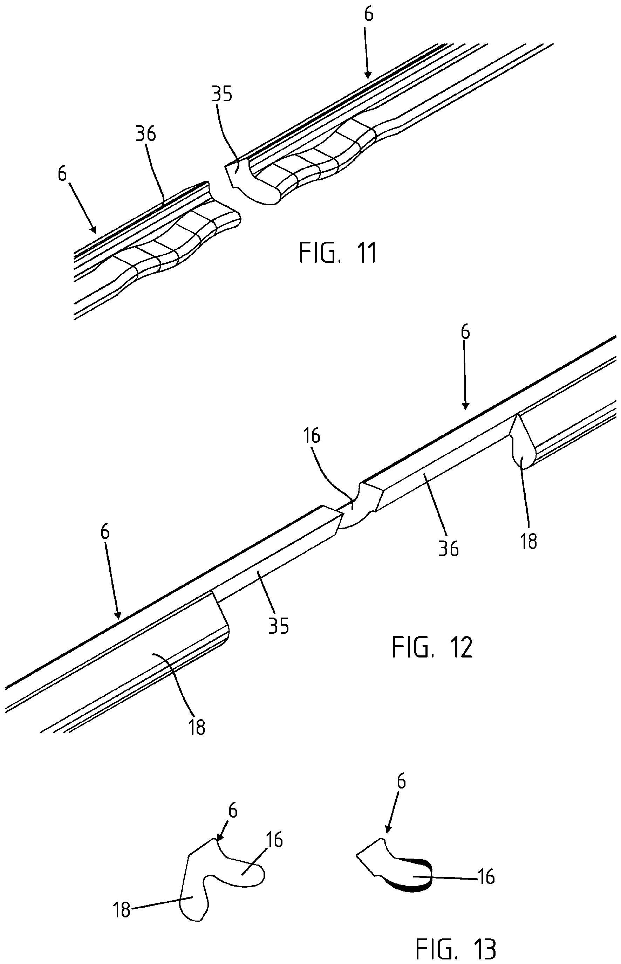

Die Figuren 11 und 12 zeigen Enden 35, 36 benachbarter Verriegelungselemente 6, bei denen der Schenkel 18 entfernt wurde, um die Führungsarme 16 in diesen Bereichen durch Prägung umzuformen. Bei diesem Beispiel sind die Enden 35, 36 im Bereich der Führungsarme 16 gewellt. Figur 13 zeigt links einen Querschnitt durch das Verriegelungselement 16 außerhalb des Endbereichs 35 und rechts den Querschnitt innerhalb des Endbereichs 35. Die Wellung bewirkt, dass die Führungsarme 15 in den Endbereichen 35, 36 dicker sind. Dadurch kann das Verriegelungselement 16 in einer Führungsnut 6 klemmend fixiert werden. Die Herstellung ist kostengünstig möglich und kann während des Ablängens eines insbesondere als Endlosstrang bereitgestellten Profils erfolgen.

### Bezugszeichen:

- 1 -: Paneel
- 2 -: Paneel
- 3 -: Unterseite
- 4 -: Oberseite
- 5 -: Randseite
- 6 -: Verriegelungselement
- 7 -: Führungsnut
- 8 -: Verriegelungskante
- 9 -: Auflagerleiste
- 10 -: Randseite
- 11 -: Verriegelungsleiste
- 12 -: Kuppelkanal
- 13 -: Kuppelwulst
- 14 -: Kuppelkanal
- 15 -: Kuppelwulst
- 16 -: Führungsarm
- 17 -: Verriegelungsvorsprung
- 18 -: Schenkel
- 19 -: Führungsfläche
- 20 -: Nut
- 21 -: untere Nutwange
- 22 -: Unterseite von 16
- 23 -: obere Nutwange von 7
- 24 -: Rastfläche
- 25 -: Stützflanke
- 26 -: Stützflanke
- 27 -: Rastvertiefung
- 28 -: Vorsprung
- 29 -: Randseite
- 30 -: Federzunge
- 31 -: Stützleiste
- 32 -: Stützleiste
- 33 -: ebener Bereich
- 34 -: Stützwand
- 35 -: Ende
- 36 -: Ende
- 37 -: Vorsprung

- F -: Pfeil in Kraftrichtung
- F1 -: Pfeil in Kraftrichtung
- F2 -: Pfeil in Kraftrichtung
- F3 -: Pfeil in Kraftrichtung
- F4 -: Pfeil in Kraftrichtung

- H -: Pfeil in Horizontalrichtung
- L1 -: Linie
- L2 -: Linie
- P -: Pfeil in Vertikalrichtung
- S -: Drehpunkt
- V -: Verlegeebene
- W -: Winkel
- W1 -: Winkel
- W2 -: Winkel
- W3 -: Winkel

## Patentansprüche

1. Mechanische Verbindung für Paneele an ihren miteinander zu verbindenden Randseiten (5, 10), wobei benachbarte erste und zweite Paneele (1, 2) durch eine im wesentlichen senkrechte Fügebewegung in horizontaler und vertikaler Richtung verriegelbar sind, wobei zur Vertikalverriegelung an dem ersten Paneel (1) eine Verriegelungskante (8) und an dem zweiten Paneel (2) ein gegenüber den Paneelen (1, 2) verlagerbares Verriegelungselement (6) angeordnet ist, wobei sich die Verriegelungskante (8) unterhalb einer Auflagerleiste (9) befindet, die als Vorsprung an einer Randseite (10) des ersten Paneels (1) ausgebildet ist und wobei das zweite Paneel (2) in der Verriegelungsposition auf der Auflagerleiste (9) zwischen der Oberseite (4) und einer Verriegelungsleiste (11) des ersten Paneels (1) aufliegt, wobei die Verriegelungsleiste (11) gegenüber der Randseite (10) des ersten Paneels (1) am weitesten vorsteht und zur Horizontalverriegelung das anschließend zu verlegende zweite Paneel (2) untergreift, wobei zur Horizontalverriegelung beim Absenken des zweiten Paneels ein Kuppelwulst (13) des zweiten Paneels (2) mit einem nach oben offenen Kuppelkanal (14) der Verriegelungsleiste (11) und ein Kuppelkanal (12) des zweiten Paneels (2) mit einem Kuppelwulst (15) der Verriegelungsleiste (11) in Eingriff gelangt, wobei das Verriegelungselement (6) durch eine Schwenkbewegung hinter die Verriegelungskante (8) verlagerbar ist, wobei das Verriegelungselement (6) einen Verriegelungsvorsprung (17) zum Verlagern hinter die Verriegelungskante (8) besitzt, **dadurch gekennzeichnet, dass** das Verriegelungselement (6) einen bogenförmigen Führungsarm (16) hat, der in einer Führungsnut (7) des zweiten Paneels (2) geführt ist und dazu ausgebildet ist, mit einer Dreh- oder Schwenkbewegung des Verriegelungselements (6) aus der Führungsnut (7) teilweise herausgezogen zu werden, indem ein aus der Führungsnut (7) vorstehender Schenkel (18) des Verriegelungselements (6) beim Ablegen in einem Bereich unterhalb der Verriegelungskante (8) mit dem ersten Paneel (1, 2) in Kontakt kommt.

2. Mechanische Verbindung nach Anspruch 1, **dadurch gekennzeichnet, dass** der Schenkel (18) starr mit dem bogenförmigen Führungsarm (16) verbunden ist.

3. Mechanische Verbindung nach Anspruch 1 oder 2, **dadurch gekennzeichnet, dass** die Führungsnut (7) zumindest bereichsweise bogenförmig gekrümmt ist.

4. Mechanische Verbindung nach einem der Ansprüche 1 bis 3, **dadurch gekennzeichnet, dass** eine untere Nutwange (21) der Führungsnut (7) zumindest bereichsweise konkav gekrümmt ist.

5. Mechanische Verbindung nach einem der Ansprüche 1 bis 4, **dadurch gekennzeichnet, dass** der Führungsarm (16) zumindest auf seiner zur Unterseite (3) der Paneele (1, 2) weisenden Unterseite (22) zumindest abschnittsweise konvex gekrümmt ist.

6. Mechanische Verbindung nach einem der Ansprüche 1 bis 5, **dadurch gekennzeichnet, dass** der Schenkel (18) in der Verriegelungsposition in eine Rastvertiefung (27) an dem ersten Paneel (1) fasst.

7. Mechanische Verbindung nach einem der Ansprüche 1 bis 6, **dadurch gekennzeichnet, dass** an dem ersten Paneel (1) benachbart der Verriegelungskante (8) eine zur Verlegeebene (V) geneigte Rastfläche (24) für den Eingriff mit dem Verriegelungsvorsprung (17) angeordnet ist.

8. Mechanische Verbindung nach einem der Ansprüche 1 bis 7, **dadurch gekennzeichnet, dass** ein freies Ende des Führungsarms (16) dazu ausgebildet ist, in der Verriegelungsposition mit seiner Unterseite (22) entfernt von einer Nutmündung der Führungsnut (7) gegen die untere Nutwange (21) der Führungsnut (7) gedrückt zu werden, um die Paneele (1, 2) vertikal gegeneinander zu verriegeln.

9. Mechanische Verbindung nach einem der Ansprüche 1 bis 8, **dadurch gekennzeichnet, dass** nicht mit den besagten Verriegelungselementen (6) versehene Randseiten (29) eines Paneels (2) mit einer Profilierung zur Vertikalverriegelung versehen sind, die eine feststehende Federzunge (30) umfasst, die mit einer Nut (20) unterhalb der Verriegelungskante (8) in Eingriff bringbar ist.

10. Mechanische Verbindung nach einem der Ansprüche 1 bis 9, **dadurch gekennzeichnet, dass** das zweite Paneel (2) entweder durch den Druck des Verriegelungselements (6) von unten gegen das erste Paneel (1) oder bei einer feststehenden Federzunge (30) gemäß Anspruch 9 von der Federzunge (30) an dem ersten Paneel (1) gehalten ist.

11. Mechanische Verbindung nach einem der Ansprüche 1 bis 10, **dadurch gekennzeichnet, dass** eine Verriegelungsbewegung des Verriegelungselements (6) zwischen einer Ausgangsstellung und einer Verriegelungsstellung unidirektional ist und ausschließlich von dem zweiten Paneel (2) hin zum ersten Paneel (1) gerichtet ist.

## Claims

1. Mechanical connection for panels on their edge sides (5, 10) which are to be connected to one another, wherein adjacent first and second panels (1, 2) can be locked in horizontal and vertical direction by means of a substantially vertical joining motion, wherein for the vertical locking a locking edge (8) is arranged on the first panel (1) and a locking element (6) which can be displaced with respect to the panels (1, 2) is arranged on the second panel (2), wherein the locking edge (8) is located below a supporting strip (9) which is formed as a projection on an edge side (10) of the first panel (1) and wherein the second panel (2) rests in the locking position on the supporting strip (9) between the top side (4) and a locking strip (11) of the first panel (1), wherein the locking strip (11) protrudes furthest with respect to the edge side (10) of the first panel (1) and for horizontal locking grips below the second panel (2) which is to be laid subsequently, wherein for horizontal locking, when lowering the second panel, a domed bead (13) of the second panel (2) comes into engagement with a domed channel (14), open upwardly, of the locking strip (11) and a domed channel (12) of the second panel (2) comes into engagement with a domed bead (15) of the locking strip (11),
wherein the locking element (6) can be displaced by means of a pivoting movement behind the locking edge (8), wherein the locking element (6) has a locking projection (17) for displacing behind the locking edge (8),
**characterised in that** the locking element (6) has an arcuate guiding arm (16) which is guided in a guiding groove (7) of the second panel (2) and is configured to be drawn partially out of the guiding groove (7) with a turning or pivoting movement of the locking element (6), **in that** a leg (18) of the locking element (6) projecting out of the guiding groove (7) comes into contact with the first panel (1, 2) in a region below the locking edge (8) during laying.

2. Mechanical connection according to claim 1, **characterised in that** the leg (18) is connected rigidly to the arcuate guiding arm (16).

3. Mechanical connection according to claim 1 or 2, **characterised in that** the guiding groove (7) is curved in an arcuate manner at least in some regions.

4. Mechanical connection according to any of claims 1 to 3, **characterised in that** a lower groove sidewall (21) of the guiding groove (7) is curved in a concave manner at least in some regions.

5. Mechanical connection according to any of claims 1 to 4, **characterised in that** the guiding arm (16) is curved in a complex manner at least in some portions at least on its lower side (22) facing the lower side (3) of the panels (1, 2).

6. Mechanical connection according to any of claims 1 to 5, **characterised in that** in the locking position, the leg (18) grips into a latching indentation (27) on the first panel (1).

7. Mechanical connection according to any of claims 1 to 6, **characterised in that** on the first panel (1) adjacent to the locking edge (8) is arranged a latching surface (24), inclined with respect to the laying plane (V), for the engagement with the locking projection (17).

8. Mechanical connection according to any of claims 1 to 7, **characterised in that** a free end of the guiding arm (16) is configured, in the locking position, to be pressed with its lower side (22) removed from a groove opening of the guiding groove (7) against the lower groove sidewall (21) of the guiding groove (7), in order to lock the panels (1, 2) vertically against one another.

9. Mechanical connection according to any of claims 1 to 8, **characterised in that** edge sides (29) of a panel (2) which are not equipped with the said locking elements (6) are equipped with a profiling for vertical locking, which comprises a fixed spring tongue (30), which can be brought into engagement with a groove (20) below the locking edge (8).

10. Mechanical connection according to any of claims 1 to 9, **characterised in that** the second panel (2) is held either by the pressure of the locking element (6) from below against the first panel (1), or, in the case of a fixed spring tongue (30) according to claim 9, is held by the spring tongue (30) on the first panel (1).

11. Mechanical connection according to any of claims 1 to 10, **characterised in that** a locking movement of the locking element (6) is unidirectional between a starting position and a locking position and is oriented exclusively from the second panel (2) in the direction of the first panel (1).

## Revendications

1. Liaison mécanique pour des panneaux au niveau de leurs faces de bord (5, 10) à relier ensemble, dans laquelle des premier et second panneaux (1, 2) adjacents peuvent être verrouillés grâce à un mouvement de jonction essentiellement perpendiculaire dans la direction horizontale et verticale, dans laquelle un bord de verrouillage (8) est agencé au niveau du premier panneau (1) en vue d'un verrouillage vertical, et un élément de verrouillage (6) pouvant être déplacé par rapport aux panneaux (1, 2) est agencé au niveau du second panneau (2), dans laquelle le bord de verrouillage (8 ) se trouve au-dessous d'une baguette de support (9) réalisée sous forme de saillie au niveau d'une face de bord (10) du premier panneau (1) et dans laquelle le second panneau (2) repose dans la position de verrouillage sur la baguette de support (9) entre la face supérieure (4) et une baguette de verrouillage (11) du premier panneau (1), dans laquelle la baguette de verrouillage (11) fait saillie le plus possible par rapport à la face de bord (10) du premier panneau (1) et vient en prise par derrière avec le second panneau (2) à mettre en place ensuite en vue de son verrouillage horizontal, dans laquelle, lors de l'abaissement du second panneau, un bourrelet de couplage (13) du second panneau (2) vient en prise avec un canal de couplage (14), ouvert vers le haut, de la baguette de verrouillage (11) et un canal de couplage (12) du second panneau (2) vient en prise avec un bourrelet de couplage (15) de la baguette de verrouillage (11),
dans laquelle l'élément de verrouillage (6) peut être déplacé derrière le bord de verrouillage (8) grâce à un mouvement pivotant, dans laquelle l'élément de verrouillage (6) présente une saillie de verrouillage (17) permettant un déplacement derrière le bord de verrouillage (8),
**caractérisée en ce que** l'élément de verrouillage (6) présente un bras de guidage (16) arqué guidé dans une rainure de guidage (7) du second panneau (2) et conçu pour être extrait partiellement de la rainure de guidage (7) grâce à un mouvement de rotation ou de pivotement de l'élément de verrouillage (6) du fait qu'une branche (18), faisant saillie hors de la rainure de guidage (7), de l'élément de verrouillage (6) vient en contact avec le premier panneau (1,2) lorsqu'elle est étendue dans une région située sous le bord de verrouillage (8).

2. Liaison mécanique selon la revendication 1, **caractérisée en ce que** la branche (18) est reliée de manière rigide au bras de guidage (16) arqué.

3. Liaison mécanique selon la revendication 1 ou 2, **caractérisée en ce que** la rainure de guidage (7) est au moins localement incurvée en forme d'arc.

4. Liaison mécanique selon l'une quelconque des revendications 1 à 3, **caractérisée en ce qu'**une assise inférieure de rainure (21) de la rainure de guidage (7) est au moins localement incurvée de manière concave.

5. Liaison mécanique selon l'une quelconque des revendications 1 à 4, **caractérisée en ce que** le bras de guidage (16) est incurvé de manière convexe au moins par sections au moins sur sa face inférieure (22) tournée vers la face inférieure (3) des panneaux (1, 2).

6. Liaison mécanique selon l'une quelconque des revendications 1 à 5, **caractérisée en ce que**, dans la position de verrouillage, la branche (18) vient en prise au niveau du premier panneau (1) dans un renfoncement de verrouillage (27).

7. Liaison mécanique selon l'une quelconque des revendications 1 à 6, **caractérisée en ce qu'**une surface de verrouillage (24) inclinée par rapport au plan d'installation (V) et destinée à venir en prise avec la saillie de verrouillage (17) est agencée au niveau du premier panneau (1) de manière adjacente au bord de verrouillage (8).

8. Liaison mécanique selon l'une quelconque des revendications 1 à 7, **caractérisée en ce qu'**une extrémité libre du bras de guidage (16) est conçue pour, dans la position de verrouillage, être poussée contre l'assise inférieure de rainure (21) de la rainure de guidage (7) avec sa face inférieure (22) éloignée d'une embouchure de la rainure de guidage (7), afin de verrouiller les panneaux (1, 2) verticalement l'un contre l'autre.

9. Liaison mécanique selon l'une quelconque des revendications 1 à 8, **caractérisée en ce que** des faces de bord (29), non munies desdits éléments de verrouillage (6), d'un panneau (2) sont munies d'un profilage permettant un verrouillage vertical et comprenant une languette de ressort (30) fixe pouvant être mise en prise avec une rainure (20) au-dessous du bord de verrouillage (8).

10. Liaison mécanique selon l'une quelconque des revendications 1 à 9, **caractérisée en ce que** le second panneau (2) est retenu au niveau du premier panneau (1) grâce à la pression par en dessous de l'élément de verrouillage (6) contre le premier panneau (1) ou grâce à la languette de ressort (30) dans le cas d'une languette de ressort (30) fixe selon la revendication 9.

11. Liaison mécanique selon l'une quelconque des revendications 1 à 10, **caractérisée en ce qu'**un mouvement de verrouillage de l'élément de verrouillage (6) est unidirectionnel entre une position de départ et une position de verrouillage et est orienté exclusivement du second panneau (2) vers le premier panneau (1).
